Europäisches Patentamt

European Patent Office

Office européen des brevets

(19)

(11) Numéro de publication: **0 280 820 B1**

## (12) FASCICULE DE BREVET EUROPEEN

(45) Date de publication de fascicule du brevet:
**27.12.91**

(51) Int. Cl.⁵: **B60C 23/00**

(21) Numéro de dépôt: **87400459.1**

(22) Date de dépôt: **03.03.87**

(54) Dispositif pour régler la pression d'un pneumatique sur un véhicule en marche.

(43) Date de publication de la demande:
**07.09.88 Bulletin 88/36**

(45) Mention de la délivrance du brevet:
**27.12.91 Bulletin 91/52**

(84) Etats contractants désignés:
**AT BE CH DE ES GB IT LI NL SE**

(56) Documents cités:
**DE-A- 2 544 555**
**DE-B- 1 010 848**
**FR-A- 2 568 345**
**FR-A- 2 586 970**
**GB-A- 607 161**

(73) Titulaire: **LABINAL**
**5 Avenue Newton**
**F-78180 Montigny le Bretonneux(FR)**

(72) Inventeur: **Apostoly, Raymond**
**Les Pré-Alpes 3 Allée Malesherbes**
**F-26000 Valence(FR)**
Inventeur: **Ballan, Bernard**
**91 rue Marius Moutet**
**F-26000 Valence(FR)**

(74) Mandataire: **Lemoine, Michel et al**
**Cabinet Michel Lemoine et Bernasconi 13**
**Boulevard des Batignolles**
**F-75008 Paris(FR)**

## Description

La présente invention concerne les dispositifs à soupape destinés à régler la pression des pneumatiques sur un véhicule en marche, du type comprenant une valve dont l'état, commandé par une pression extérieure, permet de faire communiquer ladite pression avec un canal de sortie reliée au pneumatique.

Dans les dispositifs connus de ce type, la valve de commande de pression de pneu doit être ouverte pendant le gonflement ou le dégonflement du pneu à la pression désirée et fermée lorsque la pression dans le conduit d'alimentation est de l'ordre de 1 bar.

En pratique, pour éviter l'usure prématurée des joints tournants, permettant d'acheminer la pression, du chassis vers les pneumatiques, le dispositif est mis hors pression par un système de purge, en dehors des phases, relativement brèves, de modification des pressions de gonflage.

En outre, ces dispositifs, fixés sur chaque roue, doivent fonctionner dans des conditions difficiles de température, de chocs et vibrations et doivent être étanches au sable, à la boue et à toutes sortes de liquides tels que eau, huiles et naphtes.

Pour ce faire, il est connu, tel que décrit dans le certificat d'utilité français 82 11002, de faire des dispositifs étanches sans système de purge pour communiquer avec l'extérieur, et possèdant une chambre, dite de respiration, isolée des canaux d'entrée et de sortie par un diaphragme souple. Cette chambre contient un ressort servant à presser un clapet contre un siège pour obturer le canal d'entrée. Ce clapet est pourvu d'une soupape anti-retour qui permet la liaison de la chambre de respiration avec le canal de sortie pour évacuer toute surpression dans ladite chambre. Mais, cette disposition présente un inconvénient car, en cas de fuite au niveau du diaphragme et du fait de la présence de la soupape anti-retour, le pneumatique peut se dégonfler entièrement au travers du conduit d'entrée mis hors pression pendant les périodes de roulage normal.

Le dispositif selon l'invention a pour but d'éviter cet inconvénient. Dans celui-ci en effet, le canal de sortie, destiné à être raccordé au pneumatique, est équipé d'une valve de type classique que la pression du pneumatique maintient fermée, ce qui a pour effet que toute fuite au niveau du dispositif ne peut pas provoquer de perte de pression à l'intérieur dudit pneumatique.

On connaît déjà, par le brevet français FR-A-2.568.345 un dispositif d'un autre type comprenant, outre le canal d'alimentation et le canal de sortie relié au pneumatique, un canal de purge. Le canal de sortie est normalement obturé par un clapet de valve sensible à la pression dans le pneumatique et susceptible d'être repoussé en position d'ouverture par un moyen mobile tel qu'une membrane possédant une face située dans une chambre communiquant directement avec le canal d'alimentation. Un clapet taré supplémentaire permet la communication avec le canal de sortie uniquement lorsque la pression d'alimentation est suffisamment importante, dans le cas du gonflage. Dans un tel dispositif, la vitesse d'ouverture ou de fermeture de la valve située sur la sortie de pneumatique, est très dépendante du niveau de pression de commande dans l'alimentation. Dans le dispositif en question, cet inconvénient est sans importance du fait que d'autres moyens sont associés tant pour la purge de gonflage que pour la purge du pneumatique. Par contre, une telle réalisation de clapet est nettement moins intéressante dans des dispositifs plus simples comportant un seul et même passage pour l'alimentation et la purge.

L'invention a pour objet un dispositif pour régler la pression d'un pneumatique sur un véhicule en marche, du type comprenant un canal d'alimentation pour être relié à une pression extérieure, un canal de sortie, relié au pneumatique et normalement obturé par un clapet de valve, ainsi que des moyens mobiles situés dans une chambre communiquant directement avec ledit canal d'alimentation dont l'une des faces est soumise directement à la pression de ladite chambre pour repousser ledit clapet de valve en position d'ouverture, caractérisé en ce fait que lesdits moyens mobiles comportent un ensemble mobile dont une autre face est soumise à ladite pression au moyen d'une fuite introduisant un retard dans l'établissement de la pression.

De façon avantageuse la surface de l'ensemble en communication avec la fuite calibrée est de valeur inférieure à la surface directement sensible à la pression de la chambre, la partie restante de surface étant en communication avec un volume à pression faible, notamment atmosphérique.

Ainsi, le canal d'alimentation en pression du dispositif communique directement avec une, ou de préférence deux chambres distinctes dont l'une contient une valve et l'autre cet ensemble mobile, sensible à la pression et destiné à agir mécaniquement sur cette valve. L'ensemble mobile consiste en deux soufflets, pistons ou membranes, de préférence concentriques et disposés l'un dans l'autre, et hermétiques entre eux. L'un, par example, le plus petit des deux coiffe une tige de commande qui, passant d'une chambre dans l'autre, peut venir agir sur le clapet de la valve, reliée au pneumatique.

Enfin, le dispositif se caractérisé également par la présence d'une fuite calibrée qui met en liaison le volume interne du soufflet coiffant la tige de commande, avec la chambre, ou l'une des chambres, par exemple la chambre contenant la valve.

Cette fuite qui retarde la chute de pression sous ce soufflet, par rapport aux deux chambres, facilite la fermeture rapide de la valve lors de la mise hors pression du conduit d'alimentation.

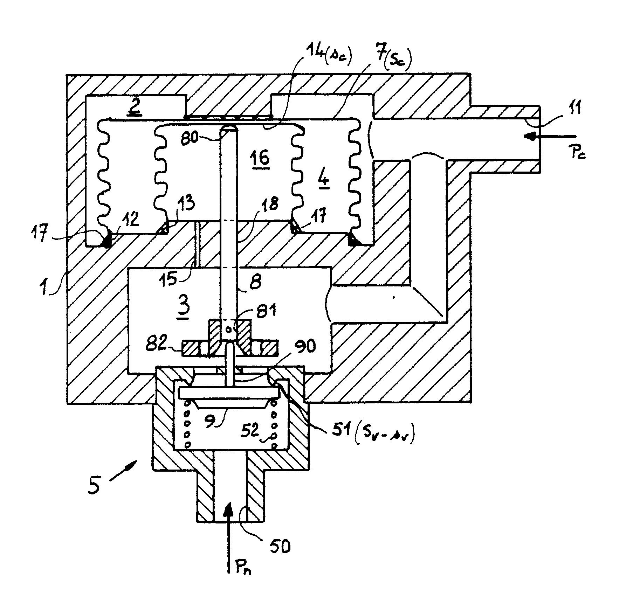

L'invention sera mieux comprise avec la description d'un exemple de réalisation conforme au dessin annexé.

Tel que représenté, le dispositif comprend un corps rigide 1, réalisé par exemple en plusieurs éléments pour pouvoir être obtenu par moulage et présenter des plans de joint plats, facilitant l'étanchéité au moyen de simples joints découpés. L'intérieur du corps délimite deux chambres 2 et 3, toutes deux directement en liaison avec un canal d'entrée 11.

La chambre 3 peut correspondre avec l'extérieur au moyen d'une valve 5. La valve 5 comprend, de façon connue, un clapet 9, maintenu en appui sur un siège 51 par un ressort de compression 52. Le clapet 9 est pourvu d'une tige 90 pénétrant dans la chambre 3.

Dans la chambre 2, un premier soufflet 7, de section utile Sc, est emmanché sur une portée circulaire 12. Ce soufflet coiffe de manière concentrique un second soufflet 14, plus petit de section sc, et est emmanché sur une autre portée circulaire 13 de dimension correspondante. L'étanchéité de ces deux soufflets peut être obtenue par des soudures d'étain 17.

Au centre du soufflet 14, la paroi séparant les chambres 2 et 3 est percée, de manière à laisser le passage, glissant, à une tige cylindrique 8.

L'extrémité 81 de cete tige, côté chambre 3, comporte une coupelle 82 pouvant venir en appui sur le corps de la valve 5, et faire ainsi office de butée pour limiter la course des soufflets. En effet, la tige 8 a une longueur adéquate pour que, son extrémité 81 étant en contact de la tige 90 du clapet 9 de la valve 5, son autre extrémité 80 soit, à un léger jeu près, au niveau de la face interne du fond du soufflet 14.

Par cette disposition, les fonds des soufflets étant pratiquement au contact l'un de l'autre, tout mouvement du soufflet 7 se répercutera sur la position du clapet 9 dont l'ouverture a pour conséquence de relier le conduit d'entré 11 au conduit de sortie 50. Une fuite calibrée 15 met en liaison le volume interne 16 du soufflet 14 avec la chambre 3. La valeur de cette fuite n'est pas très critique ; il suffit pour un bon fonctionnement du dispositif que la constante du temps de décharge du volume 16 soit nettement plus longue que celle de la cavité 2 à travers le conduit d'alimentation 11. A noter que cette fuite peut être obtenue simplement par le jeu existant entre la tige de commande 8 et son alésage de guidage 18.

Le fonctionnement du dispositif est le suivant :

Lorsque le canal d'alimentation 11 est purgé, c'est-à-dire à la pression atmosphérique, les soufflets 7 et 14 sont détendus et la valve 5 est fermée par la double action du ressort 52 et de la pression Pn régnant dans le pneumatique.

Le volume 4 à l'intérieur du soufflet 7 est, par construction, à la pression atmosphérique. La course possible entre la butée 82 et le corps de la valve 5 étant réduite, l'élévation de pression à l'intérieur de ce soufflet 7, à l'état comprimé, est négligeable.

Pour une pression de commande Pc, arrivant par le conduit d'alimentation 11 et s'établissant dans les chambres 2 et 3 ainsi qu'avec retard dans le volume 16 du petit soufflet 14, on peut faire le bilan des forces suivantes s'exerçant sur le clapet 9 de la valve.

a) - les forces tendant à ouvrir la valve :

Sc . Pc et sv . Pc (sv étant la section du clapet 9 côté chambre 3)

b) - les forces tendant à fermer la valve :

sc . Pc et Sv . Pn (Sv étant la section du clapet 9 côté pneumatique)

Pour que la valve s'ouvre il faut satisfaire à la relation suivante :

$$(Sc + sv) \, Pc > sc . Pc + Sv . Pn$$

en négligeant la force du ressort 52 et l'élasticité des capsules.

Dans la pratique, on peut considérer que les sections Sv et sv sont identiques, et le rapport à respecter entre les sections valve Sv et soufflets (Sc - sc) doit sensiblement correspondre au rapport entre les pressions maximale et minimale du pneumatique que l'on souhaite piloter.

La valve étant ouverte, pour la pression P dans les chambres 2 et 3, il suffit de faire croître ou décroître cette pression à la valeur désirée pour gonfler ou dégonfler le pneumatique.

En effet, grâce à l'action des soufflets, la valve reste ouverte tant que les pressions dans le pneu et dans le conduit d'alimentation sont égales.

Lorsque le pneumatique est à la pression désirée P, on purge rapidement le canal d'alimentation 11. La pression résiduelle P à l'intérieur du soufflet 14 décroissant lentement, au travers de la fuite 15 dans le canal 11, le soufflet 14 repousse le soufflet 7 ce sui favorise la fermeture de la valve 5.

Une fuite au niveau des soufflets 7 et/ou 14 n'a pas pour conséquence la perte de pression du pneumatique car cela n'affecte pas le fonctionnement normal de la valve 5.

Le dispositif objet de l'invention trouve son application sur tous véhicules et particulièrement les poids lourds civils ou militaires.

Le dispositif peut faire l'objet de variantes :

Par exemple, au lieu de deux chambres 2 et 3 on pourrait avoir une seule chambre contenant les soufflets et le clapet de valve 5.

Les soufflets pourraient être remplacés par d'autres organes mobiles sensibles à la pression, par exemple des membranes.

La fuite 15 pourrait relier le volume 16 avec n'importe laquelle des chambres 2, 3 ou avec une chambre unique, par exemple par un petit trou dans la paroi de soufflet ou de membrane.

## Revendications

1. Dispositif pour régler la pression d'un pneumatique sur un véhicule en marche, du type comprenant un canal d'alimentation (11) pour être relié à une pression extérieure, un canal de sortie, relié au pneumatique et normalement obturé par un clapet de valve (9), ainsi que des moyens mobiles situés dans une chambre (2) communiquant directement avec ledit canal d'alimentation (11) et dont l'une des faces (Sc) est soumise directement à la pression de ladite chambre (2) pour repousser ledit clapet de valve (9) en position d'ouverture, caractérisé en ce que lesdits moyens mobiles comportent un ensemble mobile (7 + 14) dont une autre face (sc) est soumise à ladite pression au moyen d'une fuite (15) introduisant un retard dans l'établissement de la pression.

2. Dispositif selon la revendication 1, caractérisé en ce que la surface (sc) de l'ensemble (7 + 14) en communication avec la fuite calibrée (15) est de valeur inférieure à la surface (Sc) directement sensible à la pression de la chambre (2), la partie restante de surface (SC - sc) étant en communication avec un volume (4) à pression faible, notamment atmosphérique.

3. Dispositif selon la revendication 2, caractérisé en ce que le canal d'alimentation (11) communique directement avec une deuxième chambre (3) contenant le clapet de valve (9).

4. Dispositif selon la revendication 3, caractérisé en ce que la fuite calibrée (15) débouche dans ladite seconde chambre (3).

5. Dispositif selon l'une des revendications 1 et 2, caractérisé en ce que l'ensemble mobile comporte deux soufflets (7, 14).

6. Dispositif selon la revendication 5, caractérisé en ce que les deux soufflets sont disposés de façon concentrique, l'un dans l'autre, et hermétiquement entre eux, l'un des soufflets coiffant une tige de commande (8) qui agit mécaniquement sur le clapet (9) de valve.

## Claims

1. A device for regulating the pressure in a tire on a moving vehicle, of the kind including an inlet channel (11) to be connected to an exterior pressure supply, an outlet channel connected to the tire and normally closed by a valve head (9), as well as movable means disposed within a chamber (2) directly communicating with said inlet channel (11) and one of the surfaces of which (Sc) is directly submitted to the pressure in said chamber (2) so as to urge said valve head (9) in the opening direction, characterized in that said movable means include a movable assembly (7 + 14) another surface (sc) of which is submitted to said pressure by means of a leakage (15) introducing a delay in the building up of the pressure.

2. The device according to claim 1, characterized in that the surface (sc) of the assembly (7 + 14) in communication with the calibrated leakage (15) is of a smaller value than the surface (Sc) directly sensitive to the pressure in the chamber (2), the remainder of the surface (Sc - sc) being in communication with a volume (4) at low pressure, notably atmospheric.

3. The device according to claim 2, characterized in that the inlet channel (11) communicates directly with a second chamber (3) containing the valve head (9).

4. The device according to claim 3, characterized in that the calibrated leakage (15) opens into said second chamber (3).

5. The device according to claim 1 or 2, characterized in that the movable assembly includes two bellows (7, 14).

6. The device according to claim 5, characterized in that the two bellows are disposed concentrically, one within the other, and hermetically sealed one from the other, one of the bellows being mounted on the end of a control rod (8) which acts mechanically on the head (9) of the valve.

## Patentansprüche

1. Vorrichtung zum Regulieren des Druckes eines Reifens bei einem in Betrieb befindlichen Fahrzeug, von der Art, die eine mit einem äußeren Druck verbindbare Zuführleitung (11), einen mit dem Reifen verbundenen und normalerweise durch ein Ventilorgan (9) verschlossenen Auslaß sowie bewegliche Mittel enthält, die in einer unmittelbar mit der besagten Zuführleitung (11) in Verbindung stehenden Kammer (2) angeordnet sind und bei denen eine Seite (Sc) unmittelbar dem Druck der besagten Kammer (2) unterworfen ist, um das besagte Ventilorgan (9) in Öffnungsstellung zu bringen, dadurch gekennzeichnet, daß die besagten beweglichen Mittel eine bewegliche Gesamtheit (7 + 14) enthalten, bei der eine andere Seite (sc) dem besagten Druck mittels eines Durchlasses (15) unterworfen ist, durch den der Druck-Aufbau eine Verzögerung erfährt.

2. Vorrichtung nach Anspruch 1, dadurch gekennzeichnet, daß die in Verbindung mit dem kalibrierten Durchlaß (15) stehende Fläche (sc) der Gesamtheit (7 + 14) eine geringere Größe als die unmittelbar dem Druck der Kammer (2) ausgesetzte Fläche (Sc) hat, wobei der verbleibende Flächenteil (Sc - sc) mit einem Volumen (4) unter niedrigem, insbesondere atmosphärischem Druck in Verbindung steht.

3. Vorrichtung nach Anspruch 2, dadurch gekennzeichnet, daß die Zuführleitung (11) unmittelbar mit einer zweiten Kammer (3) mit dem Ventilorgan (9) in Verbindung steht.

4. Vorrichtung nach Anspruch 3, dadurch gekennzeichnet, daß der kalibrierte Durchlaß (15) in die besagte zweite Kammer (3) mündet.

5. Vorrichtung nach einem der Ansprüche 1 und 2, dadurch gekennzeichnet, daß die bewegliche Gesamtheit zwei Faltenbälge (7, 14) enthält.

6. Vorrichtung nach Anspruch 5, dadurch gekennzeichnet, daß die beiden Faltenbälge konzentrisch angeordnet sind, einer im anderen und gegeneinander abgeschlossen, wobei einer der Faltenbälge eine Betätigungsstange (8) haubenartig übergreift, die mechanisch auf das Ventilorgan (9) wirkt.